# EUROPÄISCHE PATENTSCHRIFT

(11) **EP 3 532 413 B1**
(45) Veröffentlichungstag und Bekanntmachung des Hinweises auf die Patenterteilung: **05.10.2022**
(21) Anmeldenummer: 17800406.5
(22) Anmeldetag: 27.10.2017
(51) Int. Cl.: B65G 47/61

(54) **VERFAHREN UND VORRICHTUNG ZUM ÖFFNEN EINER TRANSPORTTASCHE**
METHOD AND DEVICE FOR OPENING A TRANSPORT BAG
PROCÉDÉ ET DISPOSITIF POUR OUVRIR UN SAC DE TRANSPORT

(30) Priorität: 27.10.2016 CH 14382016; 23.11.2016 WO PCT/CH2016/000146; 31.01.2017 CH 1092017; 31.01.2017 CH 1102017; 05.05.2017 CH 6072017; 24.05.2017 CH 6842017; 20.06.2017 CH 7962017
(43) Veröffentlichungstag der Anmeldung: 04.09.2019
(73) Patentinhaber: Ferag AG, 8340 Hinwil (CH)
(72) Erfinder: RAMSEIER, Marcel, 8623 Wetzikon (CH); STAUBER, Erwin, 8624 Grüt (CH); KELLER, Martin, 8488 Turbenthal (CH)
(74) Vertreter: Rentsch Partner AG
(86) Internationale Anmeldenummer: PCT/EP2017/077603
(87) Internationale Veröffentlichungsnummer: WO 2018/078098

(56) Entgegenhaltungen:
- EP-A1- 1 420 106
- EP-A1- 3 028 961
- EP-A2- 2 196 415
- DE-A1- 10 354 419
- DE-A1-102010 053 590
- DE-A1-102012 018 925
- DE-A1-102014 203 298

## Beschreibung

### Technisches Gebiet

Die vorliegende Erfindung bezieht sich auf das Gebiet der Transport- und Fördertechnik. Sie betrifft ein Verfahren und eine Vorrichtung zum Öffnen einer Transporttasche zum Be- und/oder Entladen gemäss Oberbegriffen der Patentansprüche 1 und 7, sowie eine Transporttasche für eine solche Vorrichtung gemäss Oberbegriff von Patentanspruch 16.

### Technischer Hintergrund

Aus dem Stand der Technik ist bekannt, dass in automatisierten Warenlagern, weitläufigen Produktionsstätten und ganz allgemein bei der Förderung und dem Transport von Waren Hängefördersysteme mit einer Vielzahl von Transporttaschen als effizientes Mittel für den Transport, die Sortierung, die Zwischenpufferung, aber auch die Zwischenlagerung verschiedener Arten von Waren eingesetzt werden.

Hängefördersysteme können als Transportkettenanlagen realisiert sein, bei welchen eine Vielzahl von Förderelementen Glieder einer Kette bilden. die entlang eines Förderweg bewegt wird. Ebenfalls bekannt sind schwerkraftgetriebene Fördersysteme, bei welchen sich einzelne mit Rädern ausgestattete Förderelemente auf entsprechenden Laufschienen bewegen. Ein solches schwerkraftgefördertes, schienengeführten Fördersystems ist aus der WO 2016/030275 A1 der Anmelderin bekannt. Hängefördersysteme mit Transportelementen sind besonders geeignet für die effiziente Förderung von heterogenen Stückgut-Waren, wie beispielsweise Werkstücken in Produktionsprozessen, Ersatzteilen, Konsumgütern wie Büchern, Kleidern, Schuhen, etc.

So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in Transportelemente und Entnehmen der Waren aus den Transportelementen.

Ein manuelles Entnehmen der Waren aus den Transporttaschen erlaubt eine flexible Handhabung verschiedener Waren, ist jedoch langsam und kostenintensiv.

Aus der DE102012018925A1 ist eine Taschen-Hängeförderanlage bekannt, bei der Taschen entlang einer Führungsschiene gefördert werden, wobei sie in Transportstellung lotrecht unterhalb der Führungsschiene hängen und in einer Beladestellung im Wesentlichen horizontal ausgerichtet sind. Die Taschen weisen Haken zum schwenkbaren Einhängen der Taschen an die Führungsschiene des Hängeförderers auf und eine Rückseite mit seitlich in Bezug auf die Vorderseite überstehenden Flügelbereichen. Die Flügelbereiche stossen beim Einlaufen der Taschen in die Beladestation gegen starre Führungsschienen mit Hilfe derer sie aus der lotrechten Transportstellung in eine horizontale Beladestellung gedreht werden. Beim Drehen in die horizontale Beladestellung öffnet sich die Tasche schwerkraftgetrieben und kann über die offenen Seiten oder den offenen Deckel beladen werden. Die Taschen sind zwingend entweder in der lotrechten geschlossenen Stellung oder in der horizontalen geöffneten Stellung. DE102012018925A1 beschreibt ein Verfahren nach dem Oberbegriff des Anspruchs 1.

Es besteht allgemein das Bedürfnis nach Fortschritten in diesem Gebiet der Technik.

### Darstellung der Erfindung

Es ist daher eine Aufgabe der vorliegenden Erfindung eine Verfahren zum Öffnen einer Transporttasche zum Be- und/oder Entladen zur Verfügung zu stellen, das es ermöglicht das Be- und Entladen effizienter und flexibler zu gestalten

Weitere Aufgaben der vorliegenden Erfindung bestehen darin, eine Vorrichtung zum Öffnen von in einem Fördersystem insbesondere hängend entlang eines Förderwegs geförderten Transporttaschen und entsprechende Transporttaschen anzugeben.

Diese und weitere Aufgaben werden durch die in den unabhängigen Patentansprüchen 1 und 7 definierten Verfahren und Vorrichtungen, sowie die im unabhängigen Anspruch 16 definierte Transporttasche gelöst.

Weitere vorteilhafte Ausführungsformen ergeben sich jeweils aus den abhängigen Ansprüchen.

Beim erfindungsgemässen Verfahren zum Öffnen einer Transporttasche zum Be- und/oder Entladen, wird die Transporttasche mit einem Fördersystem insbesondere hängend entlang eines Förderwegs zu einer Vorrichtung zum Öffnen der Transporttasche gefördert. Die Transporttasche weist eine Vorderwand und eine Rückwand auf und ist mit einem beweglichen Schubelement versehen, das eine Relativbewegung der Vorderwand und der Rückwand zueinander zwischen einem geschlossenen Taschenzustand und einem geöffneten Taschenzustand bewirkt. Dabei wird mittels einer aktiv bewegten Schubeinrichtung eine Schubkraft auf ein erstes Ende des Schubelements der Transporttasche ausgeübt und das Schubelement wird aus einer Ruhekonformation in eine schubkraftbeaufschlagte Konformation überführt, so dass die Vorderwand und die Rückwand relativ zueinander in Richtung eines geöffneten Taschenzustands bewegt werden, wodurch wiederum die Transporttasche zum Be- und/oder Entladen geöffnet wird.

Die Transporttasche ist vorzugsweise derart am Fördersystem gehalten, dass das Fördersystem ein Widerlager zu der von der Schubeinrichtung ausgeübten Schubkraft bildet. An diesem Widerlager greift ein zweites Ende des Schubelements an.

Das erfindungsgemässe Schubelement ist im Wesentlichen längenstabil, so dass es beim Anlegen der Schubkraft an das eine Ende nicht zu einer Verkürzung des Schubelements kommt, sondern dieses aus einer Ruhekonformation ausgelenkt wird. Diese Auslenkbewegung wird genutzt um die Transporttasche ganz oder teilweise zu öffnen.

Durch das Anlegen der Schubkraft wird vorzugsweise der Abstand zwischen dem ersten Ende des Schubelements und dem am Widerlager angreifenden zweiten Ende des Schubelements verkürzt. Dabei wird das längenstabile Schubelement in eine schubkraftbeaufschlagte Konformation überführt und dabei die Vorderwand und die Rückwand relativ zueinander in Richtung des geöffneten Taschenzustands bewegt.

Mit Hilfe der aktiv bewegbaren und steuerbaren Schubeinrichtung kann die Transporttasche gemäss einer bevorzugten Ausführungsform für eine zum Be- und/oder Entladen benötigte Zeit in einem geöffneten Taschenzustand gehalten werden. Diese Zeit kann von einer Steuereinrichtung bestimmt werden.

Die Öffnungszeit und -weite ist dabei abhängig von der Fördergeschwindigkeit der Taschen, der Bewegungsgeschwindigkeit der Schubeinrichtung und deren Bewegungsbahn.

Die Transporttasche kann in einem geöffneten Taschenzustand während des Be- und/oder Entladens ruhen oder von der Fördervorrichtung weiter gefördert werden, wobei die Schubeinrichtung im zweiten Fall entsprechend mitbewegt wird. Bei einer bewegten Tasche wird die Schubeinrichtung zum Öffnen der Tasche entsprechend schneller als die Tasche bewegt und zum Offenhalten wird sie vorzugsweise mit der gleichen Geschwindigkeit und Richtung wie die Tasche bewegt. Der Bewegungsvektor des Schubelements kann vom Vektor der gewünschten Bewegung des ersten Endes der Schubeinrichtung an der Tasche abweichen. Entscheidend ist lediglich, dass die Bewegung der Schubeinrichtung derart gesteuert ist, dass sie zur gewünschten Bewegung des Schubelements führt.

Gemäss einer bevorzugten Ausführungsform der Erfindung wird die hängend angeförderte Transporttasche von der Schubeinrichtung geöffnet und davor, während oder danach aus der hängenden Position in eine Abgabeposition geschwenkt.

Die erfindungsgemässe Vorrichtung zum Öffnen von in einem Fördersystem insbesondere hängend entlang eines Förderwegs geförderten Transporttaschen umfasst eine aktiv bewegbare Schubeinrichtung und mindestens eine Transporttasche mit oberseitiger Öffnung. Die Transporttasche weist einen Boden, eine Vorderwand und eine Rückwand und ein die beiden Wände verbindendes Schubelement auf. Das Schubelement weist ein erstes Ende zum Angreifen einer Schubeinrichtung auf und ein zweites Ende, das an einem vom Fördersystem gebildeten Widerlager angreift, so dass beim Anlegen einer von der Schubeinrichtung ausgeübten Schubkraft an das erste Ende des Schubelements eine Relativbewegung der Vorderwand und der Rückwand zueinander zwischen einem geschlossenen Taschenzustand und einem geöffneten Taschenzustand bewirkt wird.

Gemäss der Erfindung ist das Schubelement längenstabil und umfasst mindestens eine Gelenkstange mit mindestens einem Momentgelenk oder mindestens eine schubstabile flexible Rute oder Gliederkette. Vorzugsweise umfasst das Schubelement mindestens zwei gelenkig miteinander verbundene Gelenkstangen in Parallelogramm-Form oder mindestens eine Schubstange mit zwei Momentgelenken.

Gemäss weiterer Ausführungsformen ist die schubstabile flexible Rute oder Gliederkette axialbeweglich in einem Kanal geführt, wobei dieser mindestens eine Unterbrechung aufweist, so dass beim Anlegen einer Schubkraft eine Auslenkung des Schubelements im Bereich der Unterbrechung des Kanals zur Relativbewegung der Vorderwand und der Rückwand zueinander und damit zum Öffnen der Tasche führt.

Bevorzugt ist das Schubelement seitlich an der Transporttasche, vorzugsweise beiderseits angeordnet. Die seitliche Anordnung ist insbesondere im Bereich der oberen Taschenöffnung vorteilhaft, da sie ein ungehindertes Be- und Entladen durch die obere Taschenöffnung ermöglicht. Wird die Tasche von der Seite Be- und/oder Entladen, so spielt der ungehinderte Zugang zur Oberseite keine Rolle und das Schubelement kann auch mittig über die Oberseite verlaufen.

Vorzugsweise ist das erste Ende des Schubelements als Schubkante ausgebildet. Dies ist nicht nur der Fall, wenn dieses erste Ende des Schubelements von einer Unterkante einer schubstabilen Vorder- oder Rückseite der Tasche gebildet wird, sondern auch bei Taschen aus textilem oder Folienmaterial, die von einen Draht- oder Kunststoffrahmen stabilisiert werden.

Gemäss weiterer bevorzugter Ausführungsformen umfasst das Schubelement schubstabile Anteile der Vorder- und/oder Rückwand.

Die schubstabilen Anteile der Vorder- und Rückwand sind vorzugsweise mit einem schwenkbeweglichen Distanzhalter miteinander verbunden. Der schwenkbeweglichen Distanzhalter ist dabei besonders bevorzugt im Bereich der oberen Taschenöffnung angeordnet und bildet in bevorzugten Ausführungsformen einen Rahmen um die Taschenöffnung.

In weiteren Ausführungsformen der Erfindung weist die Schubeinrichtung einen mit dem ersten Ende des Schubelements zusammenwirkenden Schieber auf. Der Schieber der Schubeinrichtung wird von einer Antriebseinrichtung aktiv bewegt.

Bevorzugt umfasst der Schieber eine Schubplatte, eine Schubrippe und/oder einen oder mehrere Schubfinger.

Gemäss bevorzugter Ausführungsformen der Erfindung ist eine Steuerungseinrichtung zur Anpassung der Fördergeschwindigkeit der mittels Fördersystem geförderten Transporttasche und der Geschwindigkeit der Schubbewegung der aktiv bewegten Schubeinrichtung aufeinander vorgesehen, so dass die Öffnungsweite und -dauer der Transporttasche individuell bestimmbar ist.

Vorzugsweise umfasst die Vorrichtung zum Öffnen der Tasche eine Zuführvorrichtung zum Zuführen von Gut in die geöffnete Transporttasche.

In bevorzugten Ausführungsformen umfasst die Schubeinrichtung ein umlaufendes Förderband mit einer Mehrzahl daran angeordneter Schieber.

Die Verlaufsrichtung des Förderbands ist dabei derart an die Verlaufsrichtung des Fördersystems angepasst, dass die Transporttasche beim Öffnen in eine Abgabeposition verschwenkt wird.

Die erfindungsgemässe Transporttasche weist eine Vorderwand und eine Rückwand aufweist und ist mit einem beweglichen Schubelement versehen. Das Schubelement wiederum weist ein erstes Ende zum Angreifen einer Schubeinrichtung auf und ein zweites Ende, das an einem vom Fördersystem gebildeten Widerlager angreift, so dass beim Anlegen einer von einer Schubeinrichtung ausgeübten Schubkraft an das erste Ende des Schubelements eine Relativbewegung der Vorderwand und der Rückwand zueinander zwischen einem geschlossenen Taschenzustand und einem geöffneten Taschenzustand bewirkbar ist.

Das Schubelement der Transporttasche umfasst vorzugsweise einen Tragabschnitt zum schubstabilen Befestigen an einem Förderelement des Fördersystems.

Die Einleitung der Schubkraft erfolgt vorzugsweise über eine schubstabile Taschenwand, besonders bevorzugt über eine Unterkante einer solchen Taschenwand.

Die schubstabilen Taschenwände sind gemäss bevorzugter Ausführungsformen aus Kunststoff-Hohlprofilplatten gefertigt.

Die Transporttaschen einer der oben genannten Vorrichtungen umfassen vorteilhaft eine schubstabile Rück- und Vorderwand, wobei der Bodenabschnitt flexibel oder steif gestaltet sein kann. Bei einer steifen Bodenplatte ist eine gelenkige Verbindung mit der Rück- und Vorderwand vorgesehen um die Beweglichkeit zwischen dem geöffneten und dem geschlossenen Taschenzustand zu gewährleisten.

Vorzugsweise sind die Rück- und Vorderwand und alle weiteren steifen Wände derart beweglich zueinander und die flexiblen weiteren Taschenwände so flexibel, dass sie im nicht-kraftbeaufschlagten vertikal hängenden Zustand schwerkraftgetrieben eine zusammengefaltete geschlossene Tasche bilden.

Gemäss weiterer Ausführungsformen können einzelne Gelenke des Schubelements arretierbar ausgestaltet sein um die Tasche auch gegen die Schwerkraft und ohne Krafteinwirkung von der Schubeinrichtung in einem geöffneten Zustand zu halten.

Besonders vorteilhaft ist die Rückwand der Transporttasche nach oben über die Höhe der Vorderwand hinaus mit einem Tragabschnitt zum Befestigen der Transporttasche an dem Förderelement verlängert.

Das Widerlager zum Abstützen der Tasche ist gemäss einer bevorzugten Ausführungsform als geschlossene oder verschliessbare Tragöse ausgebildet in der eine ebenfalls geschlossene oder verschliessbare Aufhängeöse der Tasche hängend gelagert ist. Die Tragöse ist vorzugsweise dem Förderelement zugeordnet.

Besonders bevorzugt umfasst die Tragöse eine Nase die die Bewegung der Aufhängeöse in Richtung des zweiten Endes des Schubelements begrenzt und die Aufhängeöse in Schubrichtung arretiert.

Anhand der in den nachfolgenden Figuren gezeigten Ausführungsbeispiele und der dazugehörigen Beschreibung werden Aspekte der Erfindung näher erläutert. Es zeigen:
- Fig. 1a: zeigt eine perspektivische Seitenansicht auf eine Vorrichtung zum Öffnen von Transporttaschen gemäss einer Ausführungsform der Erfindung mit einem teilweise dargestellten Fördersystem und einer hängend entlang des Förderwegs geförderten Transporttaschen, wobei die aktiv bewegten Schubeinrichtung schematisch als schwenkbeweglich angeordnete Schubplatte dargestellt ist und die noch geschlossene Transporttasche in Richtung einer Zuführvorrichtung gefördert wird;
- Fig. 1b: zeigt die Vorrichtung gemäss Fig. 1a bei der die Transporttasche von der Schubplatte geöffnet an der Zuführeinrichtung gehalten wird;
- Fig. 2: zeigt eine weitere Ausgestaltung der Vorrichtung zum Öffnen von Transporttaschen, bei der ein linear auf- und ab-bewegliches Schubelement eine erste Transporttasche in einem geöffneten Zustand hält und eine nachlaufende zweite Transporttasche sich noch im geschlossenen Zustand befindet;
- Fig. 3: zeigt eine schematische Seitenansicht einer weiteren Ausführungsform einer Vorrichtung zum Öffnen von Transporttaschen, bei der gefüllt von einem teilweise dargestellten Fördersystem angeförderte Transporttaschen von an einem umlaufenden Förderband angeordneten Schubrippen zum Entleeren geöffnet werden;
- Fig. 4a: eine weitere Ausführungsform einer Transporttasche in einer Seitenansicht im befüllten Zustand (nicht Teil der Erfindung);
- Fig. 4b: die Transporttasche gemäss der Fig. 4a im leeren, geschlossenen Zustand;
- Fig. 5a: eine weitere Ausführungsform einer Transporttasche in einer Seitenansicht im befüllten Zustand (nicht Teil der Erfindung);
- Fig. 5b: die Transporttasche gemäss der Fig. 5a im leeren, geschlossenen Zustand;
- Fig. 6a: eine weitere Ausführungsform einer Transporttasche in einer Seitenansicht im befüllten Zustand;
- Fig. 6b: die Transporttasche gemäss der Fig. 6a im leeren, geschlossenen Zustand;
- Fig. 7a: eine weitere Ausführungsform einer Transporttasche in einer Seitenansicht im geöffneten Zustand;
- Fig. 7b: die Transporttasche gemäss der Fig. 7a im leeren, geschlossenen Zustand;
- Fig. 8a: eine weitere Ausführungsform einer Transporttasche in einer Seitenansicht im geöffneten Zustand (nicht Teil der Erfindung);
- Fig. 8b: die Transporttasche gemäss der Fig. 8a im leeren, geschlossenen Zustand;
- Fig. 9a: eine weitere Ausführungsform einer Transporttasche in einer Seitenansicht im geöffneten Zustand (nicht Teil der Erfindung);
- Fig. 9b: die Transporttasche gemäss der Fig. 9a im leeren, geschlossenen Zustand;
- Fig. 10a: eine weitere Ausführungsform einer Transporttasche in einer Seitenansicht im geöffneten Zustand (nicht Teil der Erfindung);
- Fig. 10b: die Transporttasche gemäss der Fig. 10a im leeren, geschlossenen Zustand;
- Fig. 11a: eine weitere Ausführungsform einer Transporttasche in einer perspektivischen Ansicht im maximal geöffneten Zustand (nicht Teil der Erfindung);
- Fig. 11b: die Transporttasche gemäss der Fig. 11a im leeren, geschlossenen Zustand;
- Fig. 12a: eine weitere Ausführungsform einer Transporttasche in einer Seitenansicht im maximal geöffneten Zustand (nicht Teil der Erfindung);

- Fig. 12b: die Transporttasche gemäss der Fig. 10a in einer perspektivischen Ansicht;
- Fig. 12c: eine Detailvergrösserung nach Fig. 10b im Bereich des Widerlagers, bei dem obere Anteile der Taschenrückwand mit einer Aufhängeöse und der an einem Förderelement angeordnete Tragöse dargestellt sind;
- Fig. 13a: eine Seitenansicht auf das Widerlager gemäss Fig. 10 wobei die Aufhängeöse schwerkraftgetrieben in einer unteren Position in der Tragöse dargestellt ist; und
- Fig. 13b: die Seitenansicht gemäss Fig. 11a bei der die Aufhängeöse schubkraftbeaufschlagt gegen eine oberseitige Arretierung in der Tragöse gedrückt ist.

### Wege zur Ausführung der Erfindung

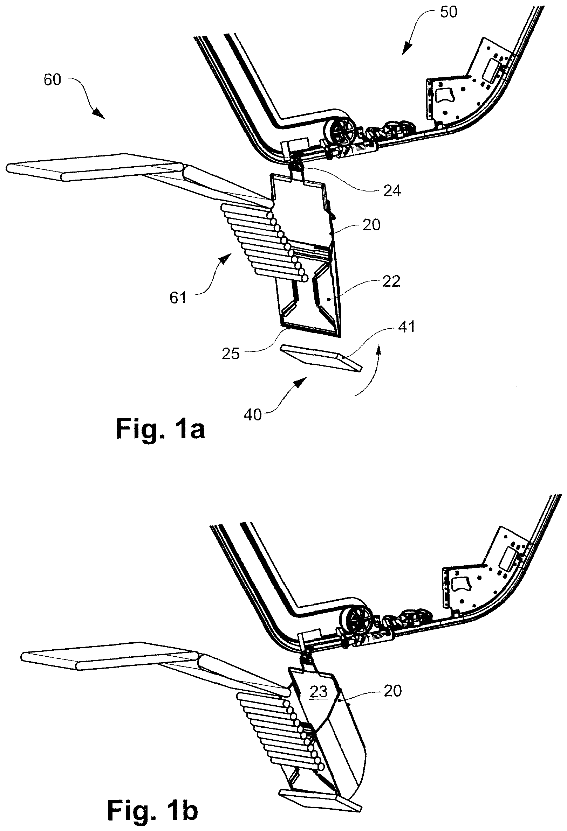

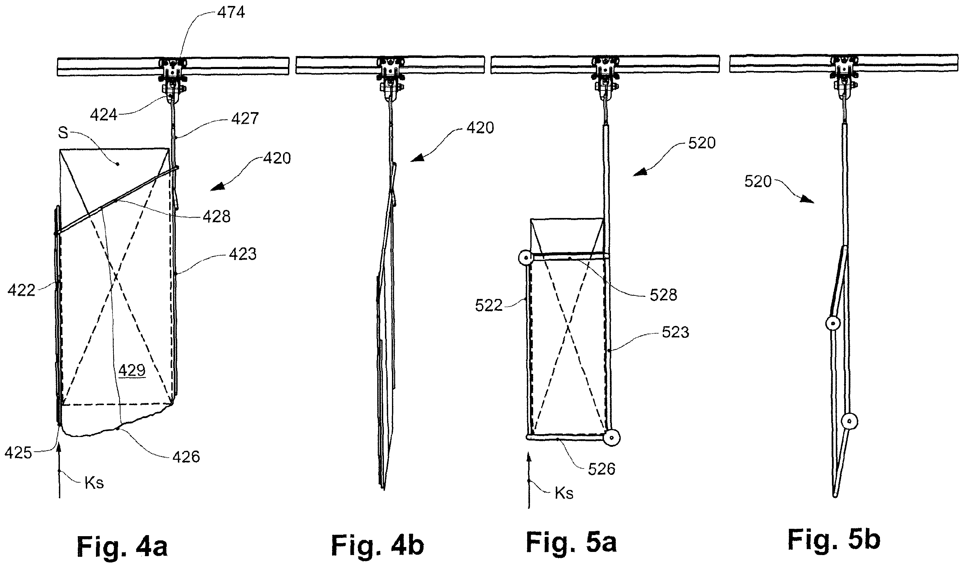

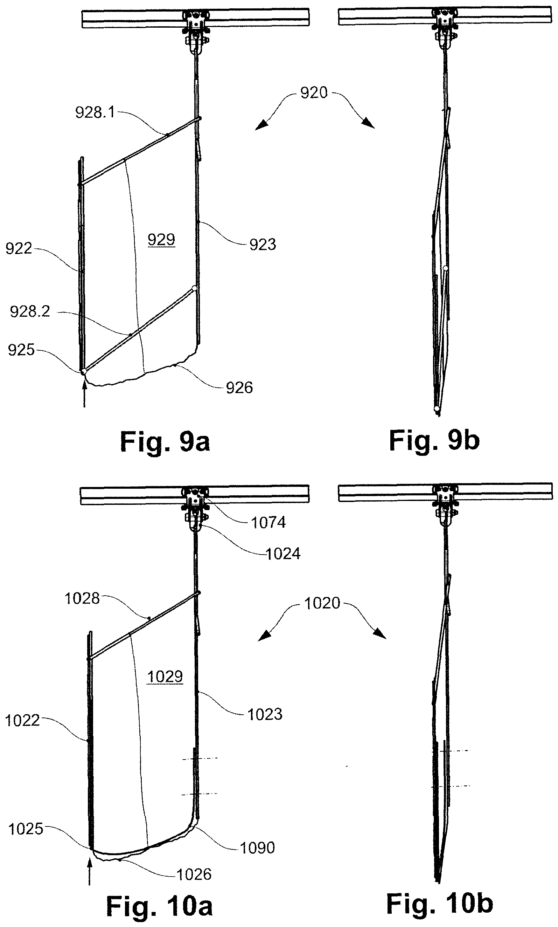

**Figur 1** zeigt eine Öffnungsvorrichtung gemäss einer ersten Ausgestaltungsform der Erfindung, in der eine leere, geschlossen an die Öffnungsvorrichtung angeförderte Transporttasche mittels einer schwenkbeweglich ausgebildeten Schubeinrichtung 40 geöffnet werden kann. Das Fördersystem 50 zur hängenden Förderung von Transporttaschen 20 soll im dargestellten Ausführungsbeispiel eine schwerkraftgeförderte Hängeförderanlage sein, sie kann aber auch durch eine Fördersystem auf Basis eines Transportkettenförderers ausgestaltet sein. Die Transporttasche umfasst ein Schubelement vom Typ wie er im Folgenden zu Figuren 4 und 9 im Detail beschrieben ist. Die Unterkante 25 der vorderen Taschenwand 22 ist Teil des Schubelements. An ihr greift das schematisch als Schubplatte dargestellte Schubelement an, indem die Schubplatte nach oben gegen die Unterkante der Taschenvorderwand 22 geschwenkt wird.

Bei ruhendem Transportelement wird die Schubbewegung der Schubplatte 41 mittels dem längenstabilen Schubelement der Transporttasche in eine Öffnungsbewegung der Tasche umgesetzt, sobald die Schubplatte gegen die Unterkante der Vorderwand trifft.

Während in der Figur 1a die geschlossene Tasche vor dem Kontakt mit der Schubplatte dargestellt ist, befindet sie sich in Figur 1b bereits im geöffneten Zustand. Die Schubplatte 41 hat eine obere Schwenkposition erreicht und mit Hilfe des Schubelements, das die Taschenvorder- und Rückwand 22 und 23 sowie den schwenkbeweglich angeordneten Distanzhalter umfasst, die Tasche geöffnet. Als Widerlager für diese Bewegung dient die Aufhängeöse 24, mittels derer die Transporttasche am Fördersystem schwenkbar gelagert ist. Im, in der Figur 1b dargestellten, geöffneten Zustand liegt die vordere Taschenwand an einem Rollenteppich 61 einer Beladestation 60 an, so dass über die ebenfalls dargestellten Förderbänder angeförderte Waren und Stückgüter in die geöffnete Tasche gefüllt werden können.

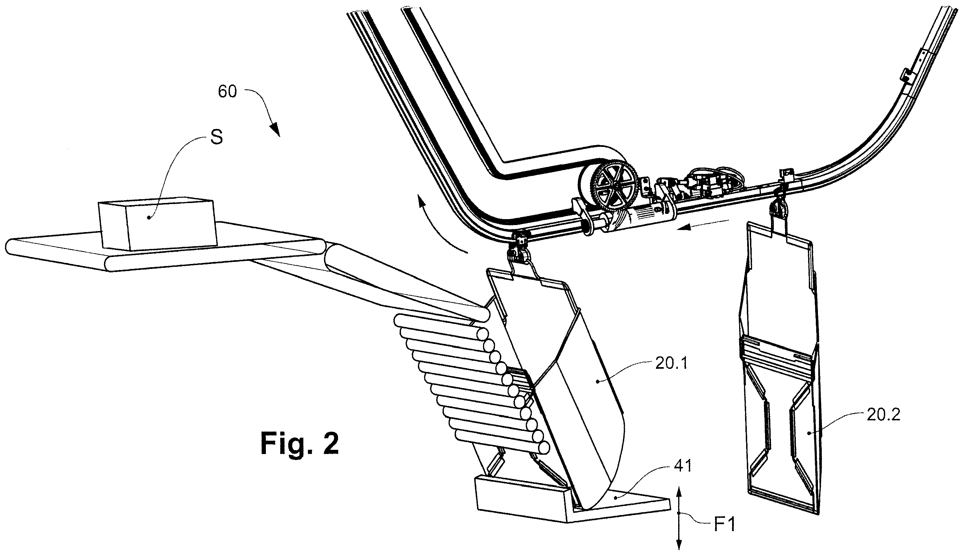

**Figur 2** zeigt eine weitere Ausgestaltung der Vorrichtung zum Öffnen von Transporttaschen, bei der eine linear auf- und ab-bewegliche Schubeinrichtung eine erste vorlaufende Transporttasche 20.1 in einem geöffneten Zustand hält und eine nachlaufende zweite Transporttasche 20.2 sich noch im geschlossenen Zustand befindet. Die Schubbewegung F1 der Schubeinrichtung ist in Hinblick auf die Strecke und die Geschwindigkeit so auf die Transportgeschwindigkeit der Tasche angepasst, dass die Transporttasche dynamisch geöffnet wird. Das heisst die Tasche steht beim Öffnen und anschliessenden Befüllen nicht still, sondern sie wird weiter transportiert und angepasst auf die Transportgeschwindigkeit von der Schubeinrichtung im geöffneten Zustand gehalten. Wie bereits in der Figur 1 beschrieben und dargestellt können Stückgüter S mittels einer Beladestation 60 in die geöffneten Transporttaschen 20 abgegeben werden.

Die in Figur 2 dargestellten Transporttaschen entsprechen wiederum den Taschen, die bereits in der Ausführungsform gemäss Figur 1 dargestellt und beschrieben wurden.

In weiteren nicht dargestellten Ausführungsformen kommen in den Vorrichtungen gemäss der Figuren 1 bis 3 andere Typen von Transporttaschen zum Einsatz. Bei Schubeinrichtungen gemäss Figur 1 hat es sich als vorteilhaft erwiesen die Schubkraft im Bereich einer Unterkante der Taschenvorderwand einzuleiten. Entsprechend kommen hier vorzugsweise solche Transporttaschen zum Einsatz, bei denen das untere Ende des Schubelements im Bereich der Unterkante der Taschenvorderwand liegt.

Bei Schubeinrichtungen gemäss Figur 2 mit linear auf- und ab-beweglichen Schubplatten 41 können verschiedene Transporttaschen zum Einsatz kommen, unabhängig davon ob das untere Ende des Schubelements an oder unter der Taschenvorderwand oder der Taschenrückwand oder in einem Bereich dazwischen angeordnet ist.

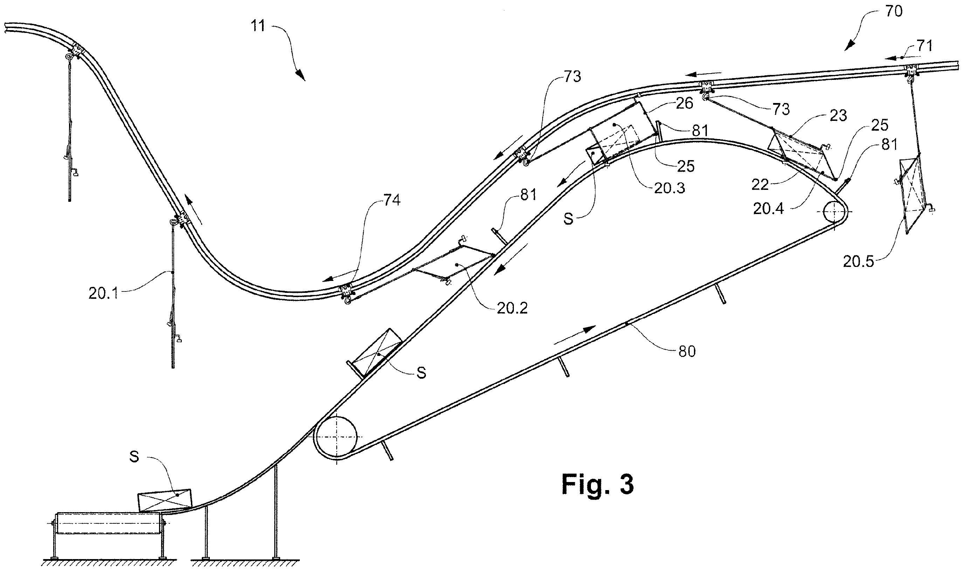

**Figur** 3 zeigt eine weitere Ausführungsform einer Öffnungsvorrichtung, wie sie in der Schweizer Patentanmeldung CH0109/17 der Anmelderin offenbart ist, auf die hiermit Bezug genommen wird.

Eine Vorrichtung 11 zum Öffnen und Entleeren von hängend geförderten Transporttaschen 20 ist in Seitenansicht dargestellt. Es werden mit einem Stückgut S befüllte Transporttaschen 20.3-20.5 in verschiedenen Zuständen des kontinuierlichen Gesamtprozesses des Öffnens dargestellt.

Nachfolgend werden die verschiedenen Vorgänge im Betrieb der Vorrichtung erläutert. Die Vorrichtung 11 erlaubt die automatisierte Öffnung und anschliessende Entleerung von Transporttaschen 20 im kontinuierlichen Betrieb, sowie die Weitergabe der entnommenen Stückgutwaren S zur weiteren Verarbeitung.

Die dargestellte Öffnungs-Vorrichtung 11 ist integriert in ein Fördersystem 70 zur hängenden Förderung von Transporttaschen 20. Ein solches Fördersystem kann als Transportkettenförderer ausgestaltet sein, oder als schwerkraftgeförderte Hängeförderanlage. Deren Funktion ist in der CH0109/17 erläutert auf die hiermit verwiesen wird.

Der Förderweg des Fördersystems 70 verläuft in Förderrichtung 71 von rechts nach links. Unterhalb des Fördersystems 70 ist ein im Gegenuhrzeigersinn umlaufendes Förderband 80 angeordnet, auf dem entlang des Umfangs in regelmässigen Abständen transversale Schubrippen 81 angeordnet.

In einem ersten Schritt wird eine zugeführte Transporttasche 20.4 vom Förderband 80 aus der Vertikalen geschwenkt. Die Geschwindigkeit des Förderbands 80 ist derart auf die Fördergeschwindigkeit angepasst, dass die nächstfolgende Rippe 81 auf eine Unterkante 25 der Taschenvorderwand 22 aufläuft und diese in Umlaufrichtung anschiebt und die Tasche dadurch geöffnet wird. Die Relativgeschwindigkeit der Rippe 81 ist dabei höher als die Fördergeschwindigkeit eines Förderelements des Fördersystems 70, so dass der Abstand von der Unterkante 25 der Taschenvorderwand zu dem von einem Traghaken 73 des Förderelements gebildeten Widerlager verringert wird.

Durch das längenstabile Schubelement der Transporttasche wird die Schubbewegung in eine Öffnungsbewegung der Tasche umgesetzt.

Die relative Phasenverschiebung der Rippen 81 in Bezug auf die Laufwagen ist so gewählt, dass eine Rippe im Kontaktabschnitt hinter der Transporttasche 20 läuft, und dabei langsam zur Transporttasche 20 aufholt, bis schliesslich die Rippe die Vorderkante 25 am Bodenabschnitt 26 erreicht. In diesem Bereich bewegt sich die Rippe horizontal schneller als die Transportasche, deren Laufwagen bereits einen Bereich eines grösser werdenden Gefälles erreicht hat. Die Rippe 81 schiebt nun die Vorderwand der Tasche 20 nach vorne, so dass sich der Abstand zwischen Vorderwand 22 und Rückwand 23 vergrössert und die Transporttasche 20 schliesslich einen geöffneten Zustand einnimmt, bei welchem sie passiv, schwerkraftgetrieben entleert werden kann.

Eine in der Transporttasche vorhandene Stückguteinheit S beginnt aus der Transporttasche 20 das Förderband 80 hinunter zu gleiten bis sie schliesslich die vorlaufende transversale Rippe 81 erreicht und von dieser gestoppt und kontrolliert vom Band weiter gefördert wird.

Anschliessend hebt die leere Transporttasche 20 vom Förderband 80 ab, schwenkt zurück in die frei hängende vertikale Lage und schliesst sich dabei schwerkraftgetrieben, da die Schubrippe 81 keine Schubkraft mehr auf das Schubelement ausübt.

Bezüglich weiterer Angaben zum Förderband 80, der Ausgestaltung der transversalen Rippen 81, dem allgemeinen Aufbau und der Steuerung des Fördersystems und der Vorrichtung zum Öffnen und Entleeren der Transporttaschen sei hier auf die CH 0109/17 verwiesen.

Im Folgenden soll anhand verschiedener Ausführungsformen erfindungsgemässer Taschen das Grundprinzip des Schubelements genauer erläutert werden.

In der **Figur 4a** ist eine mit einem Stückgut oder Paket S befüllte Transporttasche 420 dargestellt, die eine stabile Vorderwand 422 und eine stabile Rückwand 423 aufweist. Die schubstabile Rückwand weist einen verlängerten oberen Bereich 427 auf, der an seinem Ende in einer Aufhängeöse 424 endet die schwenkbar an einem Laufwagen 474 gelagert ist.

Das Schubelement der Transporttasche 420 umfasst die schubstabilen Vorder- und Rückwände 422, 423 und zwei seitlich angeordnete, sie schwenkbeweglich verbindende Distanzhalter 428.

Da auch die Distanzhalter schubstabil sind, kommt es beim Anlegen einer Schubkraft Ks von unten gegen die Unterkante 425 der Taschenvorderwand 422 einer geschlossenen Tasche durch eine in der **Figur 4b** nicht dargestellte Schubeinrichtung zwangsläufig zum Verschwenken des Distanzhalters 428 in Bezug auf die stabilen Taschenwände. Das Verschwenken resultiert in einer Relativbewegung der Taschenwände und zur Vergrösserung deren Abstands zumindest im Bereich des Distanzhalters, also im Bereich der Taschenöffnung.

Die seitlichen Taschenwände 429 und der Boden 426 sind im dargestellten Ausführungsbeispiel aus einem flexiblen, zugstabilen Textil- oder Netzmaterial gefertigt und setzen der Bewegung des Schubelements solange keinen nennenswerten Widerstand entgegen bis sie auf Zug belastet werden.

In der Ausführungsform gemäss **Figur 5** ist eine Transporttasche 20 dargestellt, bei der schubstabile Vorder- und Rückwände 522, 523 durch zwei seitlich angeordnete, sie schwenkbeweglich verbindende Distanzhalter 528 und einen schwenkbeweglich angeordneten stabilen Boden 526 miteinander verbunden sind. In der Figur 5b ist wiederum der schwerkraftgetrieben geschlossene Zustand einer leeren Tasche dargestellt. Durch Schieben von Unten (Schubkraft Ks) kann die Vorderwand 522 angehoben werden. Die schubstabile Parallelogramm-Konstruktion aus Vorder- und Rückwänden 522, 523, Distanzhalter 528 und Boden 526 führt wiederum zum Öffnen der Transporttasche 520.

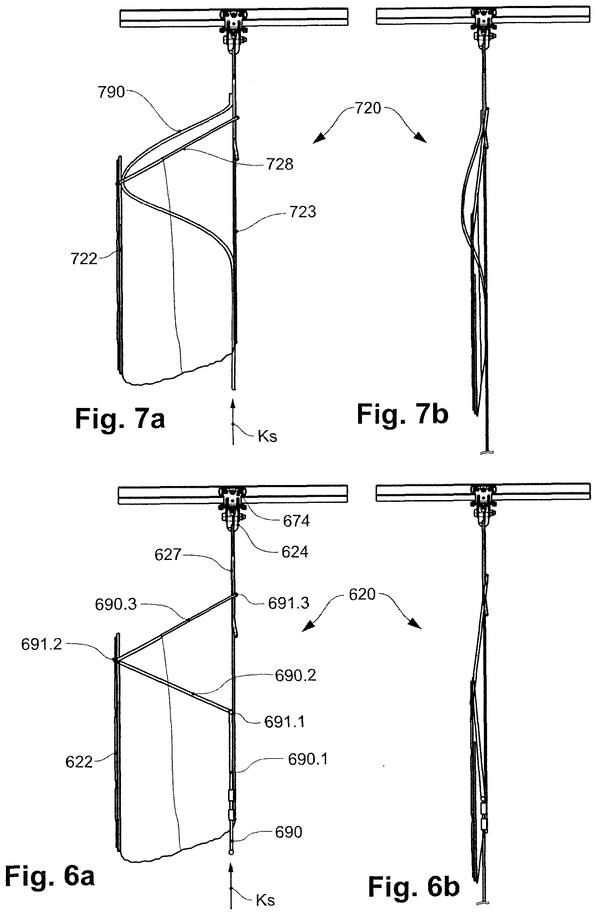

In der **Figur 6** ist eine weitere Ausführungsform einer erfindungsgemässen Transporttasche 620 dargestellt, bei der das Schubelement zwei beidseitig der Tasche angeordnete Schubstangen 690 mit je drei Momentgelenken 691.1, 691.2, 691.3 umfasst. Der Angriffspunkt für die Schubkraft liegt bei der dargestellten Ausführungsform nun an der Taschenrückwand 623. Ein erster unterer Abschnitt der Schubstange ist axialbeweglich an der Aussenkante der Taschenrückwand in zwei Laschen geführt. Durch Schieben von Unten (Anlegen der Schubkraft Ks am unteren Ende der Schubstange), wird die axiale Schubbewegung des ersten Abschnitts 690.1 der Schubstange über das erste Gelenk 691.1 auf einen zweiten Abschnitt der Schubstange 690.2 übertragen, der mit einem oberen Ende gelenkig am dritten Abschnitt der Schubstange 690.3 und schwenkbeweglich an der Taschenvorderwand 622 angreift. Der dritte Schubstangenabschnitt 690.3 kann auch als Distanzelement ausgebildet sein. Er ist wiederum mit seinem oberen Ende am verlängerten oberen Bereich 627 der Taschenrückwand schwenkbar gelagert, der endständig in einer Aufhängeöse 624 endet am Laufwagen 674 gelagert ist. Durch Anlegen der Schubkraft wird die Taschenvorderwand von der Rückwand weg bewegt und die Tasche öffnet sich.

In der Ausführungsform gemäss **Figur 7** umfasst das Schubelement eine schubstabile flexible Rute 790, die ähnlich wie die Schubstange aus Figur 6 seitlich an der Taschenrückwand 723 geführt und in einem mittleren Bereich an der Taschenvorderwand 722 befestigt ist. Wird das untere Ende derflexiblen Rute nach oben geschoben, so öffnet sich die Tasche, da Vorder- und Rückwand auseinanderbewegt werden.

Im dargestellten Ausführungsbeispiel sind die Taschenvorder- und Rückwand noch zusätzlich durch einen schwenkbeweglich angeordneten Distanzhalter 728 miteinander verbunden. Dieser stabilisiert die Bewegung der beiden Wände zueinander und verhindert ein unkontrolliertes Verkippen der Wände beim Öffnen und Schliessen.

In weiteren nicht in den Figuren dargestellten Ausführungsformen kann auf den Distanzhalter auch verzichtet werden.

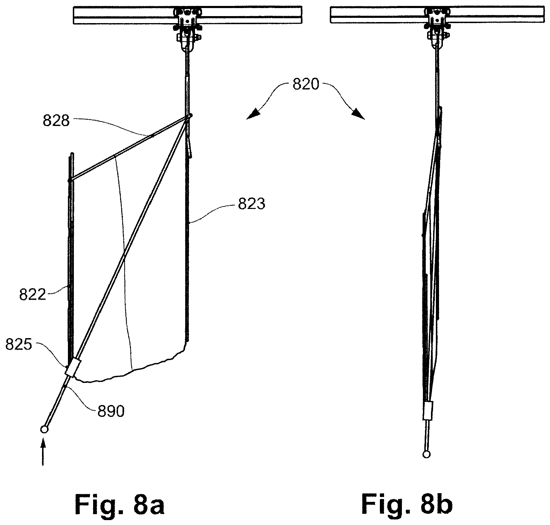

Bei der Ausführungsform der Transporttasche 820 gemäss **Figur 8** sind die Angriffspunkte für die Schubeinrichtung an verlängerte, seitlich an der Tasche angeordnete Hebel 890 vorgesehen. An der unteren Kante der Taschenvorderseite ist eine Führungshülse 825 angeordnet, in der der Hebel 890 verschiebbeweglich geführt ist. Während das untere Ende des Hebles 890 frei liegt, ist das entgegengesetzte obere Ende schwenkbeweglich an der Taschenrückwand 823 gelagert. Wird die Schubkraft an ein unteres Ende des Hebels 890 angelegt und dieses untere Ende angehoben, so hebt sich auch die Taschenvorderwand 822 und wird mittels Distanzhalter 828 von der Rückwand 823 entfernt und die Tasche wird geöffnet. Da der Hebel 890 nach unten und vorne über die Taschenvorderwand 822 ragt, ist er besonders gut für die Schubeinrichtung erreichbar, wobei der Taschenboden freigestellt bleibt.

In der **Figur 9** ist eine Transporttasche 920 gemäss einer weiteren Ausführungsform dargestellt, die weitgehend der Ausführungsform gemäss Figur 4 entspricht, bei der an der Unterkante 925 der vorderen Taschenwand 922 beidseitig zweite Distanzhalter 928.2 schwenkbeweglich angeordnet sind, die annähernd parallel zu den beiden oberen Distanzhaltern 928.1 verlaufen und mit jeweils einem zweiten, hinteren Ende an der Rückwand 923 schwenkbeweglich angreifen. Obwohl die Seitenwände 929 und der Boden aus flexiblem Folien-, Textil- oder Netzmaterial gefertigt sind bewirken die beiden zusätzlichen Distanzhalter ein hohes Mass an Bewegungsgenauigkeit beim Öffnen und Schliessen der Taschen.

Eine weitere Ausführungsform der Transporttaschen ist in der **Figur 10** gezeigt. Die Transporttasche 1020 entspricht wiederum weitgehend der Ausführungsform gemäss Figur 4, wobei hier nun die beiden Unterkanten der Vorder- und Rückwand 1022, 1023 durch je einen seitlich innerhalb der Tasche angeordneten flexiblen Streifen 1090, vorzugsweise aus Federblech, miteinander verbunden sind. Die beiden Blechstreifen führen dazu, dass auch die unteren Bereiche der Taschen-Vorder- und Rückwand beim Öffnen der Taschen auseinanderbewegt werden, so dass die Vorder- und Rückwand während dem Öffnen annähernd parallel zueinander stehen.

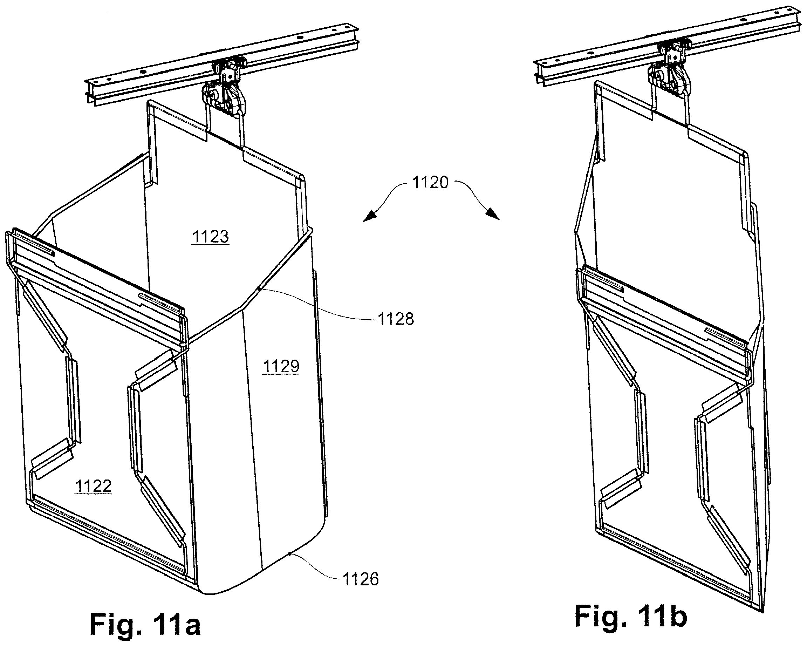

In der **Figur 11** ist eine Transporttasche 1120 in perspektivischer Ansicht dargestellt, die im Wesentlichen dem Typ aus Figur 4 entspricht. Das Schubelement umfasst hier jeweils eine schubstabile Rahmenkonstruktion an Vorder- und Rückwand 1122, 1123, die wiederum über ein schwenkbeweglich gelagertes Distanzelement 1128 miteinander verbunden sind. Seitenwände 1129 und Boden 1126 sind aus einem flexiblen Textil- oder Folienmaterial hergestellt.

Der Fachmann versteht, dass der Laufwagen beim Anlegen der Schubkraft an die Unterkante der Vorderwand fixiert, gebremst oder zumindest kontrolliert bewegt werden muss, damit es zum Öffnen der Tasche und nicht einfach zum Verschieben des Transportwagens bei geschlossener Tasche kommt. Dies gilt grundsätzlich für alle Typen und Ausführungsformen der Transporttaschen, unabhängig von der Gestaltung des Schubelements. Die nötige Kontrolle über die Bewegung des Transportsystems und dessen Synchronisierung mit der Schubeinrichtung wird durch eine Steuereinrichtung bewerkstelligt.

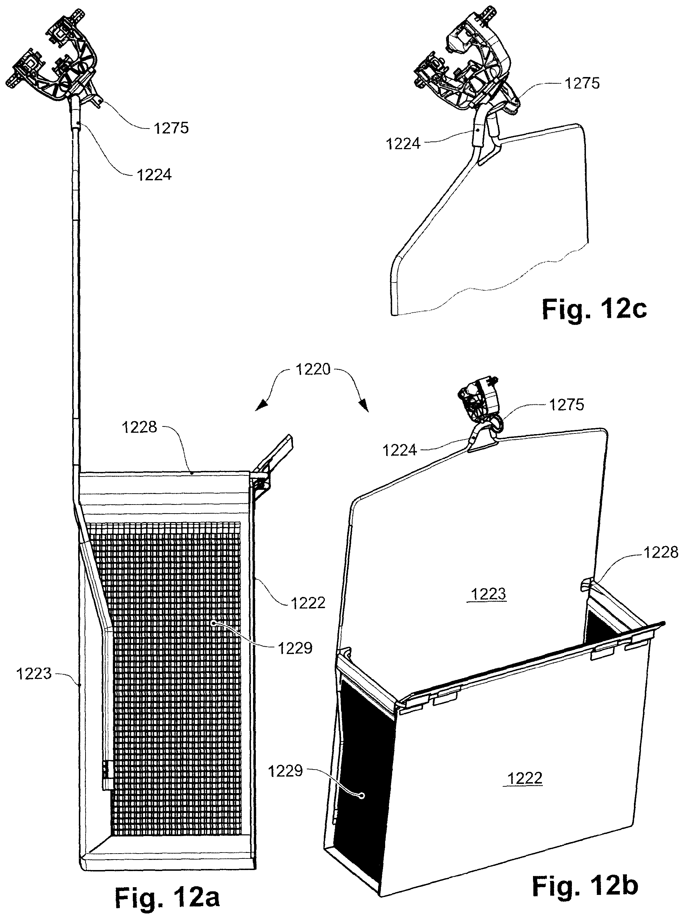

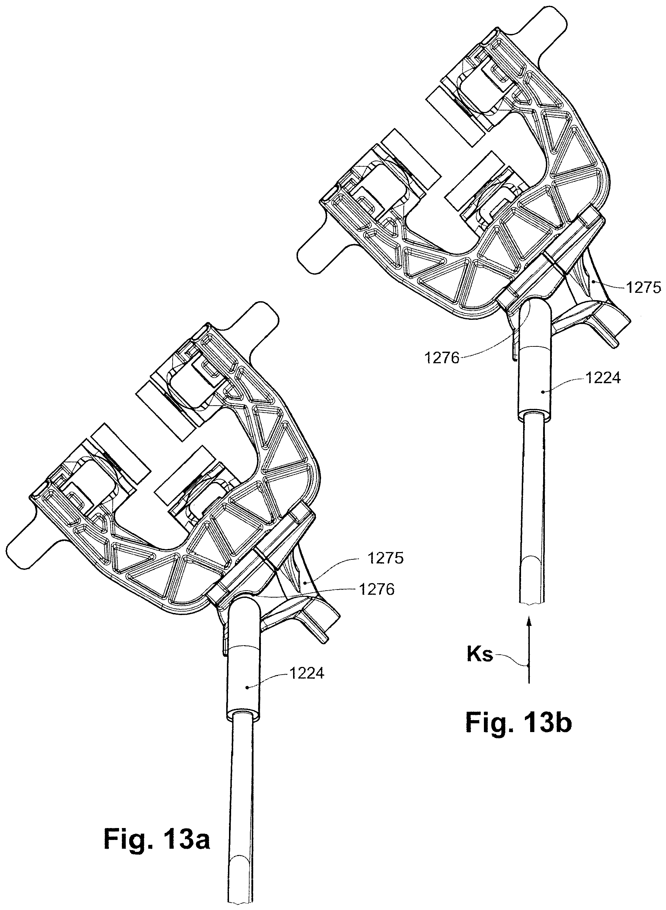

In den **Figuren 12** und **13** soll anhand weiterer Ausführungsformen näher auf die bevorzugten Arten der Lagerung der Transporttaschen am Transportsystem, insbes. an den Laufwagen, eingegangen werden.

In der CH0110/17 der Anmelderin sind Vorrichtungen und Verfahren zum Drehen, Öffnen und Befüllen hängend geförderter Transporttaschen beschrieben, die mit einer geschlossenen oder verschliessbaren Aufhängeöse an einer ebensolchen Tragöse eines Förderelements, insbesondere einem Laufwagen oder einem Förderkettenglied, hängend gelagert sind. Die Tragösen sind derart ausgestaltet, dass die Aufhängeöse in der Tragöse mindestens zwei stabile Positionen einnehmen kann, wobei die Aufhängeöse in einer ersten stabilen Position gegenüber der Aufhängeöse in einer zweiten stabilen Position um einen Winkel gedreht ist.

In **Figuren 12a** und **12b** ist eine solche Transporttasche 1220 in einer seitlichen und in einer perspektivischen Ansicht dargestellt. Sie weist eine Aufhängeöse 1224 auf, die in einer Tragöse 1275 eines Laufwagen einer schwerkraftgeförderten Hängeförderanlage, analog zu der Anlage wie sie beispielsweise in der WO 2016/030275A1 der Anmelderin offenbart ist. Die Laufschiene und weitere Elemente des Fördersystems sind nicht dargestellt.

Die Transporttasche umfasst eine Vorderwand 1222, einen Bodenabschnitt 1226 sowie eine Rückwand 1223, die an den aneinander stossenden Kanten schwenkbar miteinander verbunden sind. Vorderwand, Rückwand und Boden sind schubstabil ausgestaltet, und können bspw. aus einem geeigneten Plastikmaterial gefertigt sein, beispielsweise einer Hohlkammerplatte. Flexibel ausgestaltete Seitenwände 1229 verbinden Vorderwand, Rückwand und Boden, so dass eine Transporttasche 1220 mit einer oberseitigen Öffnung resultiert. Die Seitenwände 1229 aus flexiblem Netzmaterial sind derart ausgestaltet, dass sie beim Schliessen der Transporttasche ohne merklichen Widerstand zusammengefaltet werden können.

Zwischen Vorderwand 1222 und Rückwand 1223 ist auf beiderseits ein schwenkbar befestigter Distanzhalter 1228 in Form eines Drahtbügels angeordnet. Der Distanzhalter 1228 ist im Wesentlichen parallel zum Boden 1226 angeordnet und gleich lang wie der Bodenabschnitt. Die Vorderwand 1222 liegt im Wesentlichen parallel zur Rückwand 1223, so dass entsprechend Rückwand 1223, Distanzhalter 1228, Vorderwand 1222 und Boden ein Parallelogramm bilden. Im unbeladenen Zustand und ohne Anlegen der Schubkraft lässt das Gewicht von Vorderwand und Bodenabschnitt die Vorderwand nach unten sinken, so dass die Transporttasche schwerkraftgetrieben in einen geschlossenen Zustand übergeht, in welchem Vorderwand und Rückwand nahe beieinander liegen. In dieser Konfiguration kann die Transporttasche platzsparend in einem Fördersystem aufbewahrt werden, indem die sie tragenden Fördereinheiten auf einer Laufschiene bündig hintereinander aufgereiht werden.

Durch das Anlegen einer Schubkraft im Bereich der Vorderkante des stabilen Bodens kommt es zum Anheben der Vorderwand 1222 und/oder des Bodenabschnitts gegenüber der Rückwand 1223. Dadurch wird die Transporttasche vom geschlossenen Zustand in einen ersten, entfalteten Zustand überführt, wie er in Figuren 10a und 10b dargestellt ist. Das Schubelement ist wiederum Parallelogramm-förmig ausgebildet.

Um beim Anlegen der Schubkraft ein Ausweichen der Tasche nach oben zu verhindern und um sicherzustellen dass die Schubbewegung der Schubeinrichtung vom Schubelement kontrolliert in eine Öffnungsbewegung umgesetzt werden kann, hat es sich als vorteilhaft erwiesen, den Weg der Aufhängeöse 1224 in der Tragöse 1275 nach oben hin zu beschränken.

In der **Figur 13a** ist eine Ausschnittsvergrösserung einer Aufhängeöse 1224 einer Transporttasche dargestellt, die in einer an einem Laufwagen angebrachten Tragöse 1275 hängend gelagert ist. Die Aufhängeöse wird vom Gewicht der, in Figur 11a nicht weiter dargestellten, übrigen Anteile der Transporttasche nach unten gezogen und ruht in einer ersten stabilen Position bei der die Transporttasche parallel zur Förderrichtung ausgerichtet ist.

In der **Figur 13b** ist der Zustand dargestellt, in dem eine Schubkraft K_{S} angelegt ist, die über das ebenfalls nicht weiter dargestellt Schubelement bis zu dessen Ende in der Aufhängeöse 1224 übertragen wird. Die Aufhängeöse ist leicht angehoben und wird gegen eine Arretiernase 1276 an der Oberseite der Tragöse 1275 gedrückt und in dieser Position reversibel fixiert. Die Arretiernase 1276 verhindert eine Ausweichbewegung der Aufhängeöse 1324 in der Tragöse 1375, respektive verringert diese auf ein Minimum. Dadurch wird die Umsetzung der Schubbewegung in die Öffnungsbewegung sehr genau kontrollierbar.

Wird die Bewegung der Aufhängeöse 1324 in der Tragöse 1375 nicht so stark eingeschränkt, so kann die Schubbewegung, die über das Schubelement vermittelt wird, auch dazu genutzt werden die Tasche anzuheben.

Die neue Tasche umfasst an der vorderen Taschenwand gemäss einer weiteren Ausführungsform einen Lappen, der Trichterförmig nach vorne geklappt werden kann und auf diese Weise das Befüllen erleichtert.

Vorzugsweise wird das Fördermittel beim Einwirken der Schubkraft zum Öffnen der Transporttasche temporär fixiert oder gehalten werden.

## Patentansprüche

1. Verfahren zum Öffnen einer Transporttasche (20) zum Be- und/oder Entladen, wobei die Transporttasche (20) mit einem Fördersystem (70) insbesondere hängend entlang eines Förderwegs zu einer Vorrichtung zum Öffnen der Transporttasche (20) gefördert wird, die Transporttasche (20) eine oberseitige Öffnung, einen Boden, eine Vorderwand (22) und eine Rückwand (23) aufweist, **dadurch gekennzeichnet, dass** die Vorderwand (22) und die Rückwand (23) schubstabil gestaltet sind und mit einem die beiden Wände verbindenden beweglichen Schubelement versehen ist, wobei das Schubelement längenstabil ist und mindestens eine Gelenkstange mit mindestens einem Momentgelenk (691.1, 691.2, 691.3) oder mindestens eine schubstabile flexible Rute (790) oder Gliederkette umfasst, wobei das Schubelement ein erstes Ende zum Angreifen einer Schubeinrichtung (40) aufweist und ein zweites Ende, das an einem vom Fördersystem (70) gebildeten Widerlager angreift und dass das Schubelement eine Relativbewegung der Vorderwand (22) und der Rückwand (23) zueinander zwischen einem geschlossenen Taschenzustand und einem geöffneten Taschenzustand bewirkt, wobei mittels einer aktiv bewegten Schubeinrichtung (40) eine Schubkraft auf ein erstes Ende des Schubelements der Transporttasche (20) ausgeübt und das Schubelement aus einer Ruhekonformation in eine schubkraftbeaufschlagte Konformation überführt wird, wodurch die Vorderwand (22) und die Rückwand (23) relativ zueinander in Richtung eines geöffneten Taschenzustands bewegt wird.

2. Verfahren nach Anspruch 1, **dadurch gekennzeichnet, dass** die Transporttasche (20) derart am Fördersystem (70) gehalten ist, dass das Fördersystem (70) ein Widerlager zu der von der Schubeinrichtung (40) ausgeübten Schubkraft bildet in dem am Widerlager ein zweites Ende des Schubelements angreift.

3. Verfahren nach Anspruch 2, **dadurch gekennzeichnet, dass** durch das Anlegen der Schubkraft der Abstand zwischen dem ersten Ende des Schubelements und dem am Widerlager angreifenden zweiten Ende des Schubelements verkürzt wird, wobei das längenstabile Schubelement in eine schubkraftbeaufschlagte Konformation überführt wird und dabei die Vorderwand (22) und die Rückwand (23) relativ zueinander in Richtung des geöffneten Taschenzustands bewegt.

4. Verfahren nach Anspruch 3, **dadurch gekennzeichnet, dass** die Transporttasche (20) von der Schubeinrichtung (40) für eine zum Be- und/oder Entladen benötigte Zeit in einem geöffneten Taschenzustand gehalten wird, wobei die Zeit von einer Steuereinrichtung bestimmt werden kann.

5. Verfahren nach einem der Ansprüche 1 bis 4, **dadurch gekennzeichnet, dass** die Transporttasche (20) in einem geöffneten Taschenzustand während des Be- und/oder Entladens ruht oder von der Fördervorrichtung weiter gefördert wird, wobei die Schubeinrichtung (40) entsprechend mitbewegt wird.

6. Verfahren nach einem der Ansprüche 1 bis 5, **dadurch gekennzeichnet, dass** die hängend angeförderte Transporttasche (20) von der Schubeinrichtung (40) geöffnet und davor, während oder danach aus der hängenden Position in eine Abgabeposition geschwenkt wird.

7. Vorrichtung (11) zum Öffnen von in einem Fördersystem (70) insbesondere hängend entlang eines Förderwegs geförderten Transporttaschen (20) mit einer aktiv bewegten Schubeinrichtung (40) und mindestens einer Transporttasche (20) mit oberseitiger Öffnung, die einen Boden, eine Vorderwand (22) und eine Rückwand (23) aufweist, wobei die Vorderwand (22) und die Rückwand (23) schubstabil gestaltet sind und ein die beiden Wände verbindendes Schubelement aufweist, wobei das Schubelement längenstabil ist und mindestens eine Gelenkstange mit mindestens einem Momentgelenk (691.1, 691.2, 691.3) oder mindestens eine schubstabile flexible Rute (790) oder Gliederkette umfasst, sowie ein erstes Ende zum Angreifen einer Schubeinrichtung (40) aufweist und ein zweites Ende, das an einem vom Fördersystem (70) gebildeten Widerlager angreift, so dass beim Anlegen einer von der Schubeinrichtung (40) ausgeübten Schubkraft an das erste Ende des Schubelements eine Relativbewegung der Vorderwand (22) und der Rückwand (23) zueinander zwischen einem geschlossenen Taschenzustand und einem geöffneten Taschenzustand bewirkt wird.

8. Vorrichtung (11) nach Anspruch 7, **dadurch gekennzeichnet, dass** das Schubelement mindestens zwei gelenkig miteinander verbundene Gelenkstangen in Parallelogramm-Form oder mindestens eine Schubstange mit zwei Gelenken, vorzugsweise Momentgelenken, umfasst.

9. Vorrichtung (11) nach Anspruch 7, **dadurch gekennzeichnet, dass** die schubstabile flexible Rute oder Gliederkette axialbeweglich in einem Kanal geführt ist, wobei dieser mindestens eine Unterbrechung aufweist, so dass beim Anlegen einer Schubkraft eine Auslenkung des Schubelements im Bereich der Unterbrechung zur Relativbewegung der Vorderwand (22) und der Rückwand (23) zueinander und damit zum Öffnen der Tasche führt.

10. Vorrichtung (11) nach einem der Ansprüche 7 bis 9, **dadurch gekennzeichnet, dass** das Schubelement seitlich an der Transporttasche (20), vorzugsweise beiderseits angeordnet ist.

11. Vorrichtung (11) nach einem der Ansprüche 7 bis 10, **dadurch gekennzeichnet, dass** Schubelement schubstabile Anteile der Vorder- und/oder Rückwand (23) umfasst.

12. Vorrichtung (11) nach einem der Ansprüche 7 bis 11, **dadurch gekennzeichnet, dass** die Schubeinrichtung (40) einen mit dem ersten Ende des Schubelements zusammenwirkenden Schieber aufweist, wobei der Schieber vorzugsweise eine Schubplatte (41), eine Schubrippe (81) und/oder einen oder mehrere Schubfinger umfasst.

13. Vorrichtung (11) nach einem der Ansprüche 7 bis 12, **dadurch gekennzeichnet, dass** sie eine Steuerungseinrichtung umfasst zur Anpassung der Fördergeschwindigkeit der mittels Fördersystem (70) geförderten Transporttasche (20) und der Geschwindigkeit der Schubbewegung der aktiv bewegten Schubeinrichtung (40) aufeinander, so dass die Öffnungsweite und -dauer der Transporttasche (20) individuell bestimmbar ist.

14. Vorrichtung (11) nach einem der Ansprüche 7 bis 13, **dadurch gekennzeichnet, dass** sie eine Zuführvorrichtung zum Zuführen von Gut, vorzugsweise Stückgut (S), in die geöffnete Transporttasche (20) aufweist.

15. Vorrichtung (11) nach einem der Ansprüche 7 bis 14, **dadurch gekennzeichnet, dass** die Schubeinrichtung (40) ein umlaufendes Förderband (80) mit einer Mehrzahl daran angeordneter Schieber umfasst.

16. Transporttasche (20) für eine Vorrichtung (11) nach einem der vorgängigen Ansprüche 7 bis 15, **dadurch gekennzeichnet, dass** sie eine oberseitige Öffnung, einen Boden, eine Vorderwand (22) und eine Rückwand (23) aufweist, wobei die Vorderwand (22) und die Rückwand (23) schubstabil gestaltet sind und mit einem beweglichen die beiden Wände verbindenden Schubelement versehen ist, wobei das Schubelement längenstabil ist und mindestens eine Gelenkstange mit mindestens einem Momentgelenk (691.1, 691.2, 691.3) oder mindestens eine schubstabile flexible Rute (790) oder Gliederkette umfasst, sowie ein erstes Ende zum Angreifen einer Schubeinrichtung (40) aufweist und ein zweites Ende, das an einem vom Fördersystem (70) gebildeten Widerlager angreift, so dass beim Anlegen einer von einer Schubeinrichtung (40) ausgeübten Schubkraft an das erste Ende des Schubelements eine Relativbewegung der Vorderwand (22) und der Rückwand (23) zueinander zwischen einem geschlossenen Taschenzustand und einem geöffneten Taschenzustand bewirkbar ist.

17. Transporttasche (20) nach Anspruch 16, **dadurch gekennzeichnet, dass** das Schubelement einen Tragabschnitt zum schubstabilen Befestigen an einem Förderelement des Fördersystems umfasst.

18. Transporttasche (20) nach Anspruch 16 oder 17, **dadurch gekennzeichnet, dass** die schubstabilen Taschenwände aus Kunststoff-Hohlprofilplatten gefertigt sind, die vorzugsweise mittels mindestens einem schwenkbeweglich gelagerten und schubstabilen Distanzelement miteinander verbunden sind.

## Claims

1. Method for opening a transport bag (20) for loading and/or unloading, wherein the transport bag (20) is conveyed, in particular in a suspended manner, by a conveying system (70) along a conveying path to an apparatus for opening the transport bag (20), the transport bag (20) comprises a top-side opening, a base, a front wall (22) and a rear wall (23), **characterized in that** the front wall (22) and the rear wall (23) are designed to be stable in relation to pushing action, and is provided with a movable push element which connects the two walls, wherein the push element is longitudinally stable and includes at least one joint rod, with at least one moment joint (691.1, 691.2, 691.3), or at least one flexible rod (790) or link chain, wherein the push element comprises a first end for action of a push device (40) and a second end which acts on a counter-bearing formed by the conveying system (70), and that the push element causes a relative movement of the front wall (22) and the rear wall (23) with respect to one another between a closed bag state and an open bag state, wherein, by means of an actively moved push device (40), a pushing force is exerted on a first end of the push element of the transport bag (20) and the push element is transferred from a rest conformation into a conformation subjected to pushing force, whereby the front wall (22) and the rear wall (23) are moved relative to one another in the direction of an open bag state.

2. Method according to Claim 1, **characterized in that** the transport bag (20) is held on the conveying system (70) in such a manner that the conveying system (70) forms a counter-bearing in relation to the pushing force exerted by the push device (40) in that a second end of the push element acts on the counter-bearing.

3. Method according to Claim 2, **characterized in that,** by way of the application of the pushing force, the distance between the first end of the push element and the second end, acting on the counter-bearing, of the push element is shortened, wherein the longitudinally stable push element is transferred into a conformation subjected to pushing force and thereby moves the front wall (22) and the rear wall (23) relative to one another in the direction of the open bag state.

4. Method according to Claim 3, **characterized in that** the transport bag (20) is held in an open bag state by the push device (40) for a length of time required for loading and/or unloading, wherein the length of time can be determined by a control device.

5. Method according to one of Claims 1 to 4, **characterized in that** the transport bag (20) rests in an open bag state during the loading and/or unloading or is conveyed onwards by the conveying device, wherein the push device (40) is moved along in a corresponding manner.

6. Method according to one of Claims 1 to 5, **characterized in that** the transport bag (20), which is conveyed in a suspended manner, is opened by the push device (40) and, beforehand, at this time or afterwards, is pivoted from the suspended position into a delivery position by said push device.

7. Apparatus (11) for opening transport bags (20) which are conveyed, in particular in a suspended manner, in a conveying system (70) along a conveying path, having an actively moved push device (40) and at least one transport bag (20) with a top-side opening, which transport bag comprises a base, a front wall (22) and a rear wall (23), wherein the front wall (22) and the rear wall (23) are designed to be stable in relation to pushing action, and comprises a push element which connects the two walls, wherein the push element is longitudinally stable and includes at least one joint rod, with at least one moment joint (691.1, 691.2, 691.3), or at least one flexible rod (790) or link chain, which is stable in relation to pushing action, and comprises a first end for action of a push device (40) and a second end which acts on a counter-bearing formed by the conveying system (70), such that, upon application of a pushing force, exerted by the push device (40), to the first end of the push element, a relative movement of the front wall (22) and the rear wall (23) with respect to one another between a closed bag state and an open bag state is brought about.

8. Apparatus (11) according to Claim 7, **characterized in that** the push element includes at least two joint rods which are connected to one another in an hinged manner forming a parallelogram shape or includes at least one push rod with two joints, preferably moment joints.

9. Apparatus (11) according to Claim 7, **characterized in that** the flexible rod or link chain that is stable in relation to pushing action is guided in an axially movable manner in a channel, wherein the latter comprises at least one interruption, such that, upon application of a pushing force, a deflection of the push element in the region of the interruption leads to the relative movement of the front wall (22) and the rear wall (23) with respect to one another and thus to the opening of the bag.

10. Apparatus (11) according to one of Claims 7 to 9, **characterized in that** the push element is arranged laterally on the transport bag (20), preferably on both sides.

11. Apparatus (11) according to one of Claims 7 to 10, **characterized in that** the push element includes portions, stable in relation to pushing action, of the front wall and/or rear wall (23).

12. Apparatus (11) according to one of Claims 7 to 11, **characterized in that** the push device (40) comprises a pusher which interacts with the first end of the push element, wherein the pusher preferably includes a push plate (41), a push rib (81) and/or one or more push fingers.

13. Apparatus (11) according to one of Claims 7 to 12, **characterized in that** said apparatus includes a control device for matching the conveying speed of the transport bag (20) conveyed by means of the conveying system (70) and the speed of the pushing movement of the actively moved push device (40) to one another such that the opening width and opening duration of the transport bag (20) can be individually determined.

14. Apparatus (11) according to one of Claims 7 to 13, **characterized in that** said apparatus comprises a feeding apparatus for feeding an item, preferably a piece item (S), into the open transport bag (20).

15. Apparatus (11) according to one of Claims 7 to 14, **characterized in that** the push device (40) includes a circulating conveyor belt (80) having a plurality of pushers arranged thereon.

16. Transport bag (20) for an apparatus (11) according to one of the preceding Claims 7 to 15, **characterized in that** said transport bag comprises a top-side opening, a base, a front wall (22) and a rear wall (23), wherein the front wall (22) and the rear wall (23) are designed to be stable in relation to pushing action, and is provided with a movable push element which connects the two walls, wherein the push element is longitudinally stable and includes at least one joint rod, with at least one moment joint (691.1, 691.2, 691.3), or at least one flexible rod (790) or link chain, which is stable in relation to pushing action, and comprises a first end for action of a push device (40) and a second end which acts on a counter-bearing formed by the conveying system (70), such that, upon application of a pushing force, exerted by a push device (40), to the first end of the push element, a relative movement of the front wall (22) and the rear wall (23) with respect to one another between a closed bag state and an open bag state can be brought about.

17. Transport bag (20) according to Claim 16, **characterized in that** the push element includes a support section for attachment, stable in relation to pushing action, to a conveying element of the conveying system.

18. Transport bag (20) according to Claim 16 or 17, **characterized in that** the bag walls, stable in relation to pushing action, are manufactured from plastic hollow-profile plates which are preferably connected to one another by means of at least one pivotably mounted spacer element which is stable in relation to pushing action.

## Revendications

1. Procédé pour ouvrir un sac de transport (20) servant au chargement et/ou au déchargement, le sac de transport (20) étant convoyé à l'aide d'un système de convoyage (70) en particulier de manière suspendue le long d'une voie de convoyage jusqu'à un dispositif servant à l'ouverture du sac de transport (20), le sac de transport (20) présentant une ouverture côté supérieur, un fond, une paroi avant (22) et une paroi arrière (23), **caractérisé en ce que** la paroi avant (22) et la paroi arrière (23) sont configurées de manière stable en poussée et est doté d'un élément de poussée mobile reliant les deux parois, l'élément de poussée étant stable en longueur et comprenant au moins une tige articulée dotée d'au moins une articulation de couple (691.1, 691.2, 691.3) ou au moins une baguette flexible (790) ou une chaîne à maillons souple stable en poussée, l'élément de poussée présentant une première extrémité pour l'action d'un dispositif de poussée (40) et une deuxième extrémité qui agit sur une butée formée par le système de convoyage (70) et **en ce que** l'élément de poussée provoque un mouvement relatif de la paroi avant (22) et de la paroi arrière (23) l'une par rapport à l'autre entre un état de sac fermé et un état de sac ouvert, une force de poussée étant exercée sur une première extrémité de l'élément de poussée du sac de transport (20) au moyen d'un dispositif de poussée (40) déplacé activement et l'élément de poussée étant transféré d'une conformation de repos à une conformation sollicitée par une force de poussée, de sorte que la paroi avant (22) et la paroi arrière (23) soient déplacées l'une par rapport à l'autre en direction d'un état de sac ouvert.

2. Procédé selon la revendication 1, **caractérisé en ce que** le sac de transport (20) est retenu sur le système de convoyage (70) de telle sorte que le système de convoyage (70) forme une butée par rapport à la force de poussée exercée par le dispositif de poussée (40) dans lequel une deuxième extrémité de l'élément de poussée agit sur la butée.

3. Procédé selon la revendication 2, **caractérisé en ce que** grâce à l'application de la force de poussée la distance entre la première extrémité de l'élément de poussée et la deuxième extrémité, agissant sur la butée, de l'élément de poussée est raccourcie, l'élément de poussée stable en longueur étant transféré à une conformation sollicitée par une force de poussée et déplaçant en l'occurrence la paroi avant (22) et la paroi arrière (23) l'une par rapport à l'autre en direction de l'état de sac ouvert.

4. Procédé selon la revendication 3, **caractérisé en ce que** le sac de transport (20) est retenu par le dispositif de poussée (40) dans un état de sac ouvert pendant une durée requise pour le chargement et/ou le déchargement, la durée pouvant être déterminée par un dispositif de commande.

5. Procédé selon l'une des revendications 1 à 4, **caractérisé en ce que** le sac de transport (20) est au repos dans un état de sac ouvert pendant le chargement et/ou le déchargement ou est convoyé plus loin par le dispositif de convoyage, le dispositif de poussée (40) étant déplacé conjointement de manière correspondante.

6. Procédé selon l'une des revendications 1 à 5, **caractérisé en ce que** le sac de transport (20) convoyé de manière suspendue est ouvert par le dispositif de poussée (40) et est pivoté avant, pendant ou après cela de la position suspendue à une position de distribution.

7. Dispositif (11) pour ouvrir des sacs de transport (20) convoyés dans un système de convoyage (70) en particulier de manière suspendue le long d'une voie de convoyage, doté d'un dispositif de poussée (40) déplacé activement et d'au moins un sac de transport (20) doté d'une ouverture côté supérieur, qui présente un fond, une paroi avant (22) et une paroi arrière (23), la paroi avant (22) et la paroi arrière (23) étant configurées de manière stable en poussée, et présente un élément de poussée reliant les deux parois, l'élément de poussée étant stable en longueur et comprenant au moins une tige articulée dotée d'au moins une articulation de couple (691.1, 691.2, 691.3) ou au moins une baguette flexible (790) ou une chaîne à maillons souple stable en poussée, et présentant une première extrémité pour l'action d'un dispositif de poussée (40) et une deuxième extrémité qui agit sur une butée formée par le système de convoyage (70) de telle sorte que lors de l'application d'une force de poussée, exercée par le dispositif de poussée (40), sur la première extrémité de l'élément de poussée, un mouvement relatif de la paroi avant (22) et de la paroi arrière (23) l'une par rapport à l'autre entre un état de sac fermé et un état de sac ouvert soit provoqué.

8. Dispositif (11) selon la revendication 7, **caractérisé en ce que** l'élément de poussée comprend au moins deux tiges articulées reliées de manière articulée les unes aux autres en forme de parallélogramme ou au moins une tige de poussée dotée de deux articulations, de préférence d'articulations de couple.

9. Dispositif (11) selon la revendication 7, **caractérisé en ce que** la baguette flexible ou chaîne à maillons souple stable en poussée est guidée de manière mobile axialement dans un canal, celui-ci présentant au moins une interruption de telle sorte que lors de l'application d'une force de poussée une déviation de l'élément de poussée dans la région de l'interruption mène au mouvement relatif de la paroi avant (22) et de la paroi arrière (23) l'une par rapport à l'autre et par conséquent à l'ouverture du sac.

10. Dispositif (11) selon l'une des revendications 7 à 9, **caractérisé en ce que** l'élément de poussée est disposé latéralement sur le sac de transport (20), de préférence des deux côtés.

11. Dispositif (11) selon l'une des revendications 7 à 10, **caractérisé en ce que** l'élément de poussée comprend des portions stables en poussée de la paroi avant et/ou de la paroi arrière (23) .

12. Dispositif (11) selon l'une des revendications 7 à 11, **caractérisé en ce que** le dispositif de poussée (40) comprend un coulisseau coopérant avec la première extrémité de l'élément de poussée, le coulisseau comprenant de préférence une plaque de poussée (41), une nervure de poussée (81) et/ou un ou plusieurs doigts de poussée.

13. Dispositif (11) selon l'une des revendications 7 à 12, **caractérisé en ce qu**'il comprend un dispositif de commande pour l'adaptation de la vitesse de convoyage du sac de transport (20) convoyé au moyen du système de convoyage (70) et de la vitesse du mouvement de poussée du dispositif de poussée (40) déplacé activement l'un vers l'autre, de telle sorte que la largeur et la durée d'ouverture du sac de transport (20) puissent être déterminées individuellement.

14. Dispositif (11) selon l'une des revendications 7 à 13, **caractérisé en ce qu'**il présente un dispositif d'amenée pour l'amenée d'une marchandise, de préférence d'une marchandise de détail (S), dans le sac de transport ouvert (20).

15. Dispositif (11) selon l'une des revendications 7 à 14, **caractérisé en ce que** le dispositif de poussée (40) comprend un convoyeur à bande rotatif (80) doté d'une pluralité de coulisseaux disposés sur celui-ci.

16. Sac de transport (20) pour un dispositif (11) selon l'une des revendications précédentes 7 à 15, **caractérisé en ce qu'**il présente une ouverture côté supérieur, un fond, une paroi avant (22) et une paroi arrière (23), la paroi avant (22) et la paroi arrière (23) étant configurées de manière stable en poussée, et est doté d'un élément de poussée mobile reliant les deux parois, l'élément de poussée étant stable en longueur et comprenant au moins une tige articulée dotée d'au moins une articulation de couple (691.1, 691.2, 691.3) ou au moins une baguette flexible (790) ou une chaîne à maillons souple stable en poussée, et présentant une première extrémité pour l'action d'un dispositif de poussée (40) et une deuxième extrémité qui agit sur une butée formée par le système de convoyage (70) de telle sorte que lors de l'application d'une force de poussée exercée par un dispositif de poussée (40) sur la première extrémité de l'élément de poussée, un mouvement relatif de la paroi avant (22) et de la paroi arrière (23) l'une par rapport à l'autre entre un état de sac fermé et un état de sac ouvert puisse être provoqué.

17. Sac de transport (20) selon la revendication 16, **caractérisé en ce que** l'élément de poussée comprend une partie de support pour la fixation stable en poussée à un élément de convoyage du système de convoyage.

18. Sac de transport (20) selon la revendication 16 ou 17, **caractérisé en ce que** les parois de sac stables en poussée sont fabriquées à partir de plaques profilées creuses en matière synthétique qui sont reliées les unes aux autres de préférence au moyen d'au moins un élément d'espacement monté mobile en pivotement et stable en poussée.
